# EUROPEAN PATENT SPECIFICATION

(11) **EP 2 238 636 B1**
(45) Date of publication and mention of the grant of the patent: **10.08.2011**
(21) Application number: 08859175.5
(22) Date of filing: 11.12.2008
(51) Int. Cl.: H01M 4/52, H01M 4/02

(54) **HOMOGENEOUS NANOPARTICLE CORE DOPING OF CATHODE MATERIAL PRECURSORS**
HOMOGENE NANOTEILCHENKERNDOTIERUNG VON VORLÄUFERN EINES KATHODENMATERIALS
DOPAGE D'UN MATÉRIAU PRÉCURSEUR DE CATHODE PAR DES COEURS HOMOGÈNES DE NANOPARTICULES

(30) Priority: 12.12.2007 EP 07024040; 17.12.2007 US 6044
(43) Date of publication of application: 13.10.2010
(73) Proprietor: Umicore, 1000 Bruxelles (BE)
(72) Inventor: ELLENWOOD, Robert, Edmonton, Alberta T6T 1Z2 (CA); PAULSEN, Jens, Cheonan City 333798 Korea (KR)
(74) Representative: Knockaert, Guy
(86) International application number: PCT/EP2008/010489
(87) International publication number: WO 2009/074311

(56) References cited:
- EP-A- 1 309 022
- EP-A- 1 553 645
- JP-A- 2006 147 499

## Description

The invention relates to the precipitation of heterogeneous metal bearing material, that is homogeneously doped with a nanoparticle metal oxide, metal halide, metal anion, or elemental metal component. The precipitated nanoparticle doped metal bearing material, especially a hydroxide or oxyhydroxide bearing material, can be used for the synthesis of cathode materials for secondary batteries.

There are many ways to introduce a dopant element into an existing product. Typical strategies include coprecipitation, spray drying, physical mixing, and heat treatment. All of these strategies have drawbacks and some applications are not suitable for doping with a wide range of dopant elements. Inappropriate impurity elements, additional processing steps, high firing temperatures, inhomogeneous dopant distribution, expensive equipment, and availability of starting materials are all potential problems associated with current technologies.

The preparation of the next generations of cathode materials for use in secondary batteries often requires the synthesis of a precursor. The precursor can then be fired with a lithium source to prepare a cathode material. Recent findings have shown that doping LiNiₓMn_{y}Co_{z}O₂ (where x, y, z ≤ 1 and x+y+z = 1) cathode materials with different elements, including but not limited to Mg, Ti, Zr, Cr, and Al, has yielded products with improved cycle life, stability, performance, and safety characteristics. It is therefore important to prepare precursors that can be easily transformed into cathode materials. It is even more beneficial if the precursors can be easily doped with other elements and that the precursor can be used to directly prepare the cathode material without additional processing steps.

A common method to prepare cathode precursor material is precipitation. Using this method, a suitable metal salt, for instance cobalt sulphate, nitrate, or chloride, is dissolved in water and precipitated by increasing the pH to yield the metal hydroxide or oxyhydroxide precursor. Dopants can be introduced through co-precipitation reactions by preparing feed solutions of the required dopant salt, for example MgSO₄.aq. The Mg salt can be combined with the cobalt feed solution or introduced separately and the combination of salts is precipitated by adjusting the pH to yield a magnesium doped cobalt hydroxide or oxyhydroxide. This precipitated material can contain a homogeneous distribution of Mg atoms in the cobalt hydroxide or oxyhydroxide precipitate. This method is only applicable if the dopant, for example Mg²⁺, and the matrix material, for example Co²⁺ are a) soluble together in the same solvent and b) precipitate together to give a homogeneous distribution of elements.

For example, doping with Ti is not very straightforward. Simple Ti⁴⁺ salts that dissolve in water are not ubiquitous as aqueous solutions of Tⁱ⁴⁺ generally yield hydrous oxides. TiOSO₄ is a mixture of TiO₂ and H₂SO₄ and although a possible starting material (such as used in JP-2006-147499), this chemical is a highly toxic and corrosive substance. In addition, the use of TiOSO₄ as a reagent introduces sulphate impurities in the precipitated material. Alkoxides and other organometallic substances are other possible starting materials, but these are generally expensive and insoluble in water.

Coprecipitation of a dopant with a major component can also lead to impurity formation. For example, in the preparation of Ni/Co/Al(OH)₂, by precipitation with base, the use of nickel cobalt and aluminum sulphate salts can lead to the formation of impurity phases in the nickel cobalt aluminum hydroxide or oxyhydroxide product. In this system, an Alx(SO₄)_{y}(OH)_{z} impurity can be formed, leading to an increase in sulphate impurity levels in the final product.

Spray drying can also yield homogeneously doped materials. This method can be tedious and expensive and the correct conditions must be found to yield particles with the correct size, morphology, and distribution of elements in the final product. As with coprecipitation, a suitable soluble metal salt and dopant salt must be found if the spray drying is performed from dissolved metal solutions. If the reactants are not available as simple salts, a suitably small, well dispersed precursor metal is needed for spray drying if the size of the spray dried particles is to be controlled. If the major feed reactant is a relatively large solid, the material is only coated with a dopant and is not homogeneously doped through to the core of the spray dried product. Spray drying can also lead to porous, low density products and this can lead to low density cathode materials.

To avoid contamination or introduction of impurity elements, spray drying is only useful if the spray dried material can decompose to yield a suitable final material. Hence, if Co₃O₄ is desired, Co(NO₃)₂, Co(OH)₂, or CoCl₂ salts and the like are more desirable since the corresponding spray dried salts can be thermally decomposed directly to form relatively pure Co₃O₄. In contrast, the decomposition of CoSO₄ would lead to higher sulphur impurity levels if the counterion does not decompose to form a labile gas.

Similar challenges to spray drying are encountered with spray pyrolysis. In addition to the requirements of soluble precursors or fine feed particle materials, expensive equipment, and fine control of particle size and morphology, the dopant element must be soluble in the precursor phase to the dopant levels required. For instance, in the production of spray pyrolysed Mg doped Co₃O₄, the level of Mg doping can reach an upper limit, likely due to the solubility and element mobility of dopant atoms in the Co₃O₄ crystal structure. In addition, if the mobility of the dopant elements is not appropriate, Co₃O₄ with pockets of higher or lower concentrations of elements can be the result. Co₃O₄ can also be less reactive than cobalt hydroxides and oxyhydroxides and would require higher temperatures to react with Li₂CO₃ in the preparation of cathode materials.

Another method to produce homogeneously doped materials is to dissolve the appropriate metal nitrate salts in their respective waters of crystallization to form a sol. For example, in the preparation of Li(Ni₁₋ₓMₓ)O_{2,} a mixture of lithium, nickel, and other metal nitrate salts are combined with a pore former salt and dissolved in a solvent. Upon heating or removal of water or other solvent, a homogeneous distribution of elements is obtained for the Li(Ni₁₋ₓMₓ)O₂, (where M = Co, Ni, or Mn) cathode material. It should be noted that decomposition and reaction of the metal nitrate salt results in the release of large amounts of toxic and corrosive NOₓ gases. While this method gives useful material, the inherent difficulty is that the elements to be combined must be soluble in the melt. In addition, if the soluble metal salt is not available for a given element, the element may not be able to be dispersed homogeneously. Ti dopant can be incorporated into the Li(Ni₁₋ₓMₓ)O₂, (where M = Co, Ni, or Mn) cathode material by heating of a mixture of TiO₂ particles with nitrate/aqua salts of nickel, manganese and/or cobalt. However, this procedure is time consuming due to the several steps needed and the lack of suitable starting materials limits the scope of this procedure. An additional limitation of this procedure is that the dopant is limited to feed materials that are soluble in the feed solution. It is not known how well the size and morphology of the cathode material can be controlled using this technique.

Another technology used to prepare a "doped" metal hydroxide or oxyhydroxide material is physical mixing or blending. Using this technology, dry powders, for example Co(OH)₂ and Mg(OH)₂, can be mixed together using a suitable blending procedure. If two materials are difficult to blend and tend to segregate, achieving a homogeneous blend can be challenging.

If the physically mixed materials can be well blended, a common occurrence is that the Mg(OH)₂ only coats the surface of the Co(OH)₂ particles and does not become completely entrained within the Co(OH)₂. The consequence of this is that the Mg is not homogeneously doped throughout the core of the Co(OH)₂ particles. To achieve a complete homogeneous distribution of dopant metal in the core, the products must be heated to allow diffusion of the Mg dopant coating into the core of the Co(OH)₂ precursor. It has been noted that the diffusion of the dopant material is highly dependant on the mobility of the ions during solid state firing and on the temperature of the solid state reaction. The increased dependence on higher firing temperatures leads to over-sintered, aggregated (instead of agglomerated) products. In addition to the non-homogeneous doping, the blending step can be an additional processing step and would add increased costs to the overall process.

Similar to the dry physical mixing strategy, an additional doping technology involves preparing a well mixed slurry of a raw material. An example of this would be a slurry of a metal hydroxide, for example Co(OH)₂, and a dopant, for example Mg(OH)₂ in a suitable solvent, for example water. The well mixed slurry can be considered to be "doped" with the dopant at this stage. The slurry can be dried to yield a material with a homogeneous distribution of dopant together with the raw material. However, as in the dry blending example, the raw material would have only a surface coating of dopant, not a homogeneous core doping, and the effectiveness of the mixing depends strongly on the ability for the two components to mix and dry without segregation.

It is the scope of the present invention to overcome the above mentioned problems in homogeneously distributing dopants in metal hydroxide or oxyhydroxide material.

In a first general embodiment, the invention covers a heterogeneous metal bearing material, comprising a host material composed of primary particles agglomerated into secondary particles, and a particulate dopant material, characterised in that the particulate dopant material is homogeneously distributed within the secondary particles of said host material.

In a particular embodiment, the host material is either one or a mixture of a metal hydroxide, oxyhydroxide, oxide, oxycarbonate, carbonate, or oxalate. In another embodiment the heterogeneous metal bearing material has the general formula (dopant material)ₐ(host material)_{b}, where a and b are weight fractions, with 0 < a < 0.4, preferably 0.001 < a < 0.4, and more preferably 0.001 < a < 0.02, and where b = 1 - a.

The dopant material is preferably either one or more of MgO, Cr₂O₃, ZrO₂, Al₂O₃, and TiO₂, and is in the form of nanoparticles. The dopant material can also be either one of MgF₂ and CaF₂, or another water insoluble metal halide, in the form of nanoparticles. Most preferably, the dopant material is TiO₂ and the host material is either one or a mixture of NiₓMn_{y}Co_{z} hydroxide, oxyhydroxide, and oxide, where x,y,z are atomic fractions, with 0≤x≤1,0≤y≤1,0≤z≤1, and x+y+z = 1. The dopant material should preferably have a size range of ≥ 5 nm and ≤ 200 nm, and preferably between 10 and 50 nm.

In yet another preferred embodiment the secondary particles of the heterogeneous metal bearing material are spherical.

In a second general embodiment, a process is described for homogeneously distributing a particulate dopant material in a host material composed of primary particles agglomerated into secondary particles, thereby obtaining a heterogeneous metal bearing composite material, comprising the steps of:
- providing a first flow comprising a solution of a precursor of the host material,
- providing a second flow comprising a precipitation agent,
- providing a third flow comprising a complexing agent,
- providing a quantity of insoluble particulate dopant material, either in one or more of said first, second and third flows, or in a fourth flow consisting of a suspension of said particulate dopant material, and
- mixing said first, second and third flow, and, if present, said fourth flow, thereby precipitating said host material and said dopant.

In this process, the solution of the precursor is preferably an aqueous metal salt solution, and also the suspension of the dopant material is a suspension in water and a suspension stabilizing agent. In a preferred embodiment, the particulate dopant material consists of stabilized nanoparticles, preferably of metals or metal oxides, and the precursor is either one or a mixture of a metal nitrate, chloride, halide, and sulphate powder.

More preferably, the dopant material is either one or more of MgO, Cr₂O₃, ZrO₂, Al₂O₃, and TiO₂, and has a size range of ≥ 5 nm and ≤ 200 nm.

In a third general embodiment, the heterogeneous metal bearing material is used for manufacturing a cathode material for a secondary battery, by firing said material with a lithium source. Here, preferably the dopant material is either one of MgO, Cr₂O₃, ZrO₂, Al₂O₃, and TiO₂, and the cathode material is a lithium transition metal oxide. More preferably, the dopant material is Al₂O₃, and the cathode material is LiNiO₂.

### Brief Description of Drawings

Figure 1 is a set of cross sectional EDS SEM micrographs of a TiO₂ doped NiₓMn_{y}Co_{z}(OH)₂ particle showing homogeneous Ti distribution throughout the interior of the secondary particles.
Figure 2 is a set of surface EDS SEM micrographs of a TiO₂ doped NiₓMn_{y}Co_{z}(OH)₂ particle showing homogeneous Ti distribution on the surface of the secondary particles.
Figure 3 is a set of SEM micrographs of TiO₂ doped NiₓMn_{y}Co_{z}(OH)₂.

The invention provides a new type of nanoparticle doped precipitate and a general procedure for preparing this new type of material. Specifically, but not limited to, this invention provides a general method to produce TiO₂ doped metal hydroxide or oxyhydroxide products through continuous precipitation. The general procedure can be applied to prepare a wide variety of doped materials by combining a feed of nanoparticles with other feeds to be precipitated during a reaction.

For example, spheroidal NiₓMn_{y}Co_{z}(OH)₂ (where x, y, z ≤ 1 and x+y+z =1), ranging in D50 from 8-21 µm, can be synthesized and used as a starting material for many applications, including, but not limited to, the synthesis of Ti doped LiNiₓMnyCo_{z}O₂ (where x, y, z ≤ 1 and x+y+z = 1) for use as a cathode material in secondary batteries. The present invention can also be used as a general method to incorporate a dopant into a material in which it is usually not stable; or to dope precipitated materials with insoluble dopants including, such as, but not limited to MgO, Cr₂O₃, ZrO₂, Al₂O₃, or TiO₂ and any general metal oxide, metal halide, metal compound, or elemental metal nanoparticle. This method is also a general method to introduce a normally unnatural dopant element into a precursor which can later be incorporated into a final material.

In the synthesis procedure according to this invention, a feed of insoluble metal oxide nanoparticles are introduced during the precipitation of a metal hydroxide or oxyhydroxide. In general, the metal oxide nanoparticles are introduced into a reactor along with a metal salt solution, an alkaline earth hydroxide, and a complexing agent.

In a preferred process according to the invention, at least two flows of reactants are added to a reactor. At least one of the flows contains a basic composition like NaOH and/or NH_{4O}H, forming the anion of the precipitate to be obtained, and another flow contains disolved metal like MSO₄, forming the cation of the precipitate. During the addition of the flows to the reactor, dopant nano-sized particles are present in the reactor. These nano particles are preferably added directly to the reactor or alternatively are fed into any one of the flows, preferably in the form of a dispersed solution containing the nano particles, but the addition can also be in the form of a fine powder.

Hence, the following supply flow schemes to the reactor can be observed:
(1) Flow 1: precipitation agent (e.g.NaOH), Flow 2: host material solution (e.g. MSO₄), Flow 3: solution of a complexing agent (e.g. NH₃), Flow 4: Nano dispersion of dopant (e.g. TiO₂)
(2) Flow 1: precipitation agent (e.g.NaOH), Flow 2: host material solution (e.g. MSO₄), Flow 3: solution of a complexing agent (e.g. NH₃), Nanoparticles: add as a powder to one of the flows or to the mixture of one or more of the Flows 1, 2, 3 (3) Nanoparticles are dispersed in the "starting water" or "starting ammonia" in the reactor, Flow 1: precipitation agent (e.g.NaOH), Flow 2: host material solution (e.g. MSO₄), Flow 3: solution of a complexing agent (e.g. NH₃).

After reaction, the precipitated slurry is collected and filtered and the solid is washed with water and then dried to yield metal hydroxide particles doped with nanoparticles. If the precipitate or transition metal ions become oxidized during the reaction or during one of the other processing steps, an oxyhydroxide or oxide of some other chemical composition is obtained.

The choice of a soluble metal salt is not restrictive. Soluble metal salts, including nitrates, chlorides, halides, and sulphates may also be used, depending on the application. For the precipitating agents, besides NaOH, for example LiOH, KOH, carbonate, and oxalate salts, may also be used to precipitate the metal salt out of its solution. Complexing agents are typically chosen from soluble amine salts or molecules, including but not limited to NH₃, ethylenediaminetetraacetate salts, urea, or other known complexing agents. The precipitated host material, for example NiₓMn_{y}Co_{z}(OH)₂, is usually a hydroxide, but could also be another metal hydroxide, oxide, oxyhydroxide, oxycarbonate, carbonate, or oxalate precipitate that is coprecipitated with the dopant nanoparticles.

The nanoparticle of choice should be of an appropriate size so that it is possible for it to fit among the primary particles of the host material. It is preferable to have a sufficiently small nanoparticle to allow the nanoparticle to become embedded throughout the NiₓMn_{y}Co_{z}(OH)₂ particle. The size requirement is generally less than 200 nm and larger than 10 nm, but nanoparticles of larger or smaller size may be acceptable depending on the composition and morphology of the composite particle required. In general, smaller nanoparticles would be advantageous if deep diffusion into the core of the particle is needed. Hence, in the spirit of this invention, it is possible to introduce any nanoparticle as a dopant so long as it may be encompassed by the host material.

The doping metal oxide is not limited to TiO₂, and any other stabilized solution of metal oxide, metal halide, metal salt, or metal nanoparticles with appropriate size may be used. The choice of nanoparticle requires that it is of appropriate size and will not dissolve appreciably, or is highly insoluble in the reaction mixture or feed solution that the nanoparticle comes in contact with. Other examples of typical metal oxides include, but are not limited to, Al₂O₃, MgO, Zr₂O₃, and Cr₂O₃. Other nanoparticle examples of metal halides include CaF₂ and MgF₂.

The nanoparticle can be introduced in several forms, but the preferred method is to introduce the nanoparticle as an aqueous dispersion as a separate feed. Other possible methods of introducing the nanoparticle feed include: as a powder directly into a reactor; as a coreactant in any one of the metal sulphate, caustic, or aqua feeds; as an aqueous or non-aqueous dispersed or slurried feed in a separate line; as a seed solution already contained in the reactor; added as part of a batch reaction; added continuously during a continuous precipitation; added as part of a reaction mixture during an autoclave or high temperature synthesis; added intermittently at only certain times during a reaction.

In a preferred embodiment of the invention, a stabilized aqueous solution of TiO₂ nanoparticles, an aqueous solution of nickel, manganese, cobalt sulphate, caustic, and aqua ammonia are introduced into a stirred and heated reactor and the precipitated material is collected. Thus, crystalline TiO₂ doped NiₓMn_{y}Co_{z}(OH)₂ is prepared under the spirit of the preferred embodiment.

The reaction can be typically performed using continuous precipitation using an overflow reactor and can be controlled by adjusting and monitoring the pH throughout the experiment. Experiments may also be performed without pH control, by adjusting the feed rates of the reactants. Another possible reaction configuration can be carried out using an autoclave reactor or a batch reactor. The continuous precipitation process is typically performed between 20 °C and 90 °C, but higher or lower temperatures can also be used. The typical solvent for the reaction is water, but other solvents, for example glycols, alcohols, acids, and bases can also likely be used.

In a typical reaction, the pH (temperature uncompensated) is controlled between values of 10.4 to 11.3, with the preferable range being between 10.8 and 11.0. In general, a higher pH will result in the precipitation of smaller secondary particles, while a lower pH will result in the precipitation of larger secondary particles. The resulting spheroidal TiO₂ doped NiₓMn_{y}Co_{z}(OH)₂ has D50 particle size volume distribution values between 5-50 µm and spans ranging from 0.5 to 2.0. More precisely, the steady state production of TiO₂ doped NiₓMn_{y}Co_{z}(OH)₂ will result in D50 particle sizes ranging from 6-21 µm with spans ranging from 0.9 to 1.3. The span is defined as being (D90-D10)/D50.

Alternatively, a less spheroidal agglomerated TiO₂ doped NiₓMn_{y}Co_{z}(OH)₂ (where x+y+z = 1) material can be produced by increasing the pH. This material retains water more easily and has steady state D50 particle sizes ranging from 4-14 µm with spans typically greater than 1. It should be noted that non-steady state conditions can result in monodisperse spheroidal particles with D50 particle sizes less than 14 µm and spans less than 1.

The primary platelet sizes of the precipitated TiO₂ doped NiₓMn_{y}Co_{z}(OH)₂ range from 10 nm to 2000 nm, with typical primary platelet sizes between 50-400 nm. The tap density of the TiO₂ doped NiₓMn_{y}Co_{z}(OH)₂ ranges from 0.7-1.5 g/cm³ and more typically is between 1.2-1.5 g/cm³. In general, larger TiO₂ doped NiₓMn_{y}Co_{z}(OH)₂ (where x+y+z = 1) secondary particles and primary particle thicknesses will give higher tap densities. The apparent density of this material ranges from 0.3-1.2 with typical values of 0.8-1.2 g/cm³.

The precipitated TiO₂ doped NiₓMn_{y}Co_{z}(OH)₂ powder from the preferred embodiment is a composite of two separate phases: one of TiO₂ and one of NiₓMn_{y}Co_{z}(OH)₂. The composite particles are usually composed of collections of primary particles of NiₓMn_{y}Co_{z}(OH)₂, with thicknesses ranging between 20-500 nm and more typically between 50-200 nm. Interdigitated and embedded between the primary platelets of NiₓMnyCo_{z}(OH)₂ are the TiO₂ nanoparticles. The TiO₂ is embedded throughout the NiₓMn_{y}Co_{z}(OH)₂ particle and is not solely on the surface of the particle.

The composite secondary particles typically have a defined spheroidal shape with a D50 range between 1-50 µm and more typically between 5-25 µm. It is during the precipitation that the PSD is typically controlled, although precipitated material can also be prepared using a gel preparation and then processed to a smaller size. Other processing methods, including grinding, milling, or other attrition techniques, may be used to prepare particles of appropriate size.

This composite can be used for the preparation of Ti doped LiMO₂ for use in cathode battery materials. In a typical synthesis, the TiO₂ doped NiₓMn_{y}Co_{z}(OH)₂ is blended with a Li source, for example Li₂CO₃, but other Li sources, for example LiOH or LiNO₃, can be used. The reaction mixture is then heated to produce a Ti doped LiMO₂.

### Example 1

A mixture of NiSO₄·6 H₂O, MnSO₄·1 H₂O, and CoSO₄·7 H₂O were dissolved in water to a summed total metal concentration of 55 g/L. A second feed of aqueous TiO₂ suspension was used as the dopant feed. The doped metal hydroxide/oxyhydroxide was then precipitated by continuously adding the 55 g/L metal Ni/Mn/CoSO₄ solution (1:1:1 Ni:Mn:Co molar ratios), a 0.6% TiO₂ suspension, an aqueous 25% NaOH solution, and a 260 g/L NH₃ solution through four tubes into an overflow reactor. The reaction was controlled via a pH feedback system to control the growth and composition of the precipitated material. The overflow reactor can be seeded with a solution of NiₓMn_{y}Co_{z}(OH)₂ (where x+y+z = 1) seed, NaOH, Na₂SO₄, ammonia, and water. Alternatively, the reaction can be started in the absence of seed using a reactor filled with water. The resulting overflow slurry was collected and the light brown solid was separated from the supernatant by filtration. After washing with water, the precipitated solid was dried in a convection oven at 70 °C to a constant mass. After drying, the powder became black. The black powder was highly flowable and easily processed and passed without difficulty through a 100 mesh screen. After screening, the powder was sent for analysis.

Chemical analysis of the precipitated material confirmed a composition consistent with a Ni_{0.32}Mn_{0.32}Co_{0.32}Ti_{0.04} metal atomic ratio. The oxygen and hydrogen levels were not measured, but the black colour of the powder indicated that oxidation was likely. The change in oxidation state was most certainly an indication that the precipitated material was no longer the simple unoxidized M(OH)₂, and that the powder was likely an oxidized form consistent with an oxide or oxyhydroxide. Powder X-ray diffraction analysis of the powder was consistent with a composite material containing a mixture of TiO₂ and slightly oxidized β-Ni_{0.33}Mn_{0.33}Co_{0.33}(OH)₂.

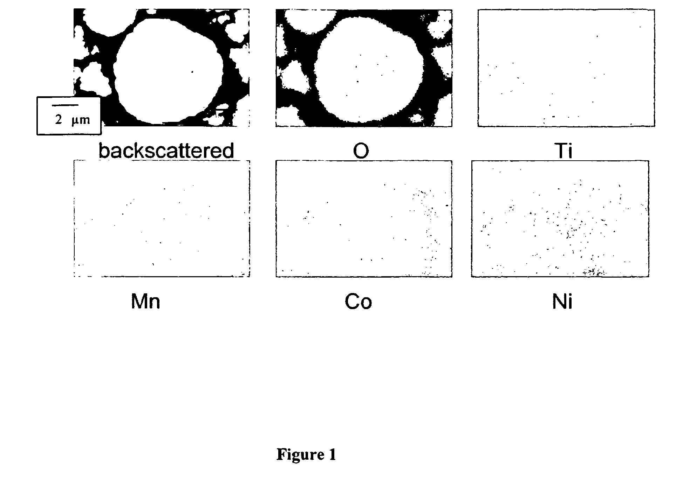

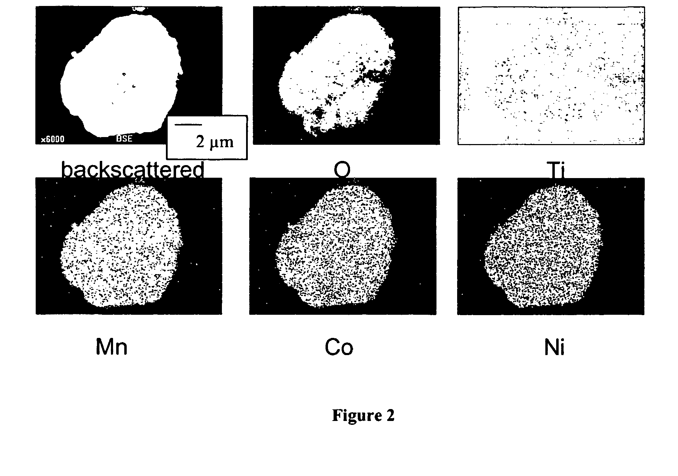

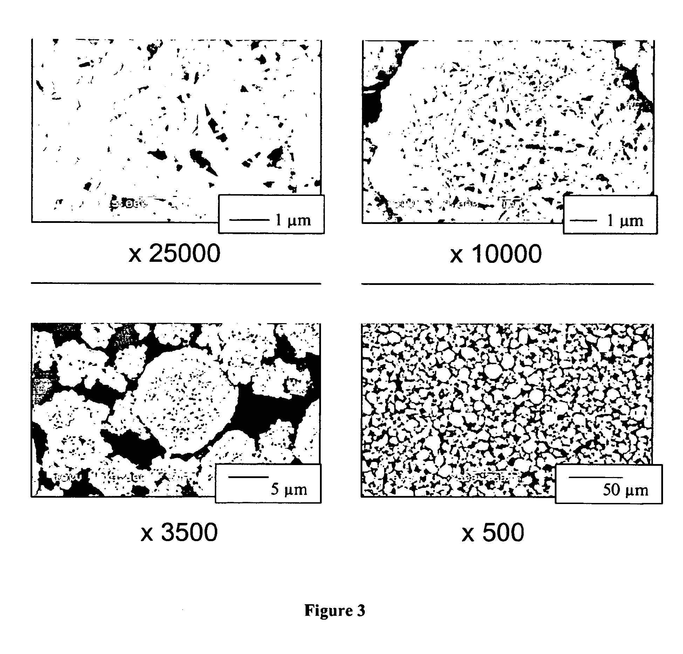

SEM micrographs (see Figure 3) of the black powder revealed that the powder was made up of spheroidal secondary particles ranging in D50 from 1-15 µm in diameter. The secondary particles were composed of primary particles with thicknesses ranging from 20-200 nm. As shown in the SEM analysis, the secondary particles were coated with small particles. It is likely that the small particles on the surface of the secondary particles of Ni_{0.33}Mn_{0.33}Co_{0.33}(OH)₂ are TiO₂ nanoparticles. Cross sectional SEM EDS micrographs (see Figure 1) of the precipitated TiO₂ doped Ni_{0.33}Mn_{0.33}Co_{0.33}(OH)₂ revealed that the Ti, Ni, Mn, and Co were also homogeneously distributed throughout the core of the hydroxide material. Additionally, surface SEM EDS micrographs reveal that there is a homogeneous distribution of Ti, Ni, Mn, and Co on the surface of the Ni_{0.33}Mn_{0.33}Co_{0.33}(OH)₂ particles. (see Figure 2)

### Example 2

Aqueous mixtures of CoSO₄, aqua ammonia, sodium hydroxide, and a TiO₂ dispersion were continuously delivered through 4 separate feed tubes into a stirred reactor containing seed solution. The pH of the reactor solution was adjusted to a pH of 11.5 (temperature compensated) using a pH feedback loop that regulated the flow of the sodium hydroxide feed. The seed solution was made up of a slurry of Co(OH)₂, sodium hydroxide, sodium sulphate, and aqua ammonia. The overflow from the reactor was collected, filtered, washed with water, and dried in a convection oven at 70°C to constant weight. The resulting flowable, pink, TiO₂ doped Co(OH)₂ powder was collected and analyzed.

The elemental analysis of the powder was consistent with the composition [TiO₂]_{0.005}[Co(OH)₂]_{0.995}. SEM analysis revealed speroidal agglomerates ranging in secondary particle size from < 5 µm to 25 µm, with primary particle thicknesses ranging between 50-500 nm. The tap and apparent density of the material varied with secondary and primary particle sizes, and precipitate shape, but a sample with a D50 of 15.06 µm and a span of 0.84, had a tap density of 1.09 g/cm³ and an apparent density of 0.72 g/cm³.

### Example 3

In this example, performed according to the general outline of Example 2, a more concentrated TiO₂ feed dispersion was delivered using a lower flowrate and a similar product was obtained. A powder was obtained that was consistent with the composition [TiO₂]_{0.005}[Co(OH)₂]_{0.995}. This sample had a D50 of 13.37 µm, a span of 0.74, a tap density of 1.06 g/cm³ and an apparent density of 0.67 g/cm³.

### Example 4

In this example, performed according to the general outline of Example 2, a more concentrated TiO₂ feed dispersion was used and a similar product was obtained. A powder was obtained that was consistent with the composition

[TiO_{2]0.010}[Co(OH)₂]_{0.990}. This sample had a D50 of 13.43 µm, a span of 0.80, a tap density of 1.25 g/cm³, and an apparent density of 0.87 g/cm³.

### Example 5

In this example, performed according to the general outline of Example 2, an aqueous mixture of MgSO₄ and CoSO₄ was used instead of the typical CoSO₄ feed. The TiO₂ feed dispersion was delivered using a lower flowrate and a similar product was obtained. A powder was obtained that was consistent with the composition [TiO₂]_{0.0025}[Mg_{0.0025}Co_{0.9975}(OH)₂]_{0.975}. This sample had a D50 of 15.97 µm, a span of 0.75, a tap density of 1.27 g/cm³ and an apparent density of 0.90 g/cm³.

## Claims

1. A heterogeneous metal bearing material, comprising a host material composed of primary particles agglomerated into secondary particles, and a particulate dopant material, **characterised in that** the particulate dopant material is homogeneously distributed within the secondary particles of said host material.

2. A heterogeneous metal bearing material according to claim 1, wherein said host material is either one or a mixture of a metal hydroxide, oxyhydroxide, oxide, oxycarbonate, carbonate, or oxalate.

3. A heterogeneous metal bearing material according to claim 2, wherein said heterogeneous metal bearing material has the general formula (dopant material)ₐ(host material)_{b}, where a and b are weight fractions, with 0 < a < 0.4, preferably 0.001 < a < 0.4, and more preferably 0.001 < a < 0.02, and where b = 1 - a.

4. A heterogeneous metal bearing material according to any one of claims 1 to 3, wherein said dopant material is either one or more of MgO, Cr₂O₃, ZrO₂, Al₂O₃, and TiO₂, and is in the form of nanoparticles.

5. A heterogeneous metal bearing material according to claim 3, wherein the dopant material is TiO₂ and the host material is either one or a mixture of NiₓMn_{y}co_{z} hydroxide, oxyhydroxide, and oxide, where x, y, z are atomic fractions, with 0≤x≤1,0≤1,0≤z ≤ 1, and x+y+z = 1; said host material optionally comprising a homogeneous distribution of Mg atoms.

6. A heterogeneous metal bearing material according to any one of claims 1 to 5, wherein said secondary particles of the heterogeneous metal bearing material are spherical.

7. A heterogeneous metal bearing material according to any one of claims 1 to 6, wherein said dopant material is either one of MgF₂ and CaF₂, or another water insoluble metal halide, and is in the form of nanoparticles.

8. A heterogeneous metal bearing material according to any one of claims 1 to 7, wherein said dopant material has a size range of ≥5 nm and ≤ 200 nm, and preferably between 10 and 50 nm.

9. Process for homogeneously distributing a particulate dopant material in a host material composed of primary particles agglomerated into secondary particles, thereby obtaining a heterogeneous metal bearing composite material, comprising the steps of:
- providing a first flow comprising a solution of a precursor of the host material,
- providing a second flow comprising a precipitation agent,
- providing a third flow comprising a complexing agent,
- providing a quantity of insoluble particulate dopant material, either in one or more of said first, second and third flows, or in a fourth flow consisting of a suspension of said particulate dopant material, and
- mixing said first, second and third flow, and, if present, said fourth flow, thereby precipitating said host material and said dopant.

10. Process according to claim 9, wherein said solution of the precursor is an aqueous metal salt solution, and said suspension of the dopant material is a suspension in water and a suspension stabilizing agent.

11. Process according to claims 9 or 10, wherein the particulate dopant material consists of stabilized nanoparticles, preferably of metals or metal oxides, and the precursor is either one or a mixture of a metal nitrate, chloride, halide, and sulphate powder.

12. Process according to any one of claims 9 to 11, wherein said dopant material is either one or more of MgO, Cr₂O₃, ZrO₂, Al₂O₃, and TiO₂, and has a size range of ≥ 5 nm and ≤ 200 nm.

13. Use of the material according to any one of claims 1 to 8 for manufacturing a cathode material for a secondary battery, by firing said material with a lithium source.

14. Use according to claim 13, wherein the dopant material is either one of MgO, Cr₂O₃, ZrO₂, Al₂O₃, and TiO₂, and the cathode material is a lithium transition metal oxide.

15. Use according to claim 14, wherein the dopant material is Al₂O₃, and the cathode material is LiNiO₂.

## Patentansprüche

1. Heterogenes, metalltragendes Material umfassend ein Wirtsmaterial, das aus primären Teilchen, die in sekundäre Teilchen agglomeriert sind, und einem teilchenförmigen Dotiermaterial besteht, **dadurch gekennzeichnet, dass** das teilchenförmige Dotiermaterial innerhalb der sekundären Teilchen des Wirtsmaterials homogen verteilt ist.

2. Heterogenes, metalltragendes Material nach Anspruch 1, wobei das Wirtsmaterial entweder eines von oder eine Mischung aus einem Metallhydroxid, Oxyhydroxid, Oxid, Oxycarbonat, Carbonat oder Oxalat ist.

3. Heterogenes, metalltragendes Material nach Anspruch 2, wobei das heterogene, metalltragende Material die allgemeine Formel (Dotiermaterial)ₐ(Wirtsmaterial)_{b} aufweist, wobei a und b Gewichtsfraktionen sind, wobei 0 < a < 0,4, bevorzugt 0,001 < a < 0,4 und noch mehr bevorzugt 0,001 < a < 0,02 beträgt und wobei b = 1 - a beträgt.

4. Heterogenes, metalltragendes Material nach einem der Ansprüche 1 bis 3, wobei das Dotiermaterial entweder eines oder mehrere von MgO, Cr₂O₃, ZrO₂, Al₂O₃ und TiO₂ ist und in Form von Nanoteilchen vorliegt.

5. Heterogenes, metalltragendes Material nach Anspruch 3, wobei das Dotiermaterial TiO₂ ist und das Wirtsmaterial entweder eines von oder eine Mischung aus NiₓMn_{y}co_{z}-Hydroxid, Oxyhydroxid und Oxid ist, wobei x, y und z Atomfraktionen sind,
wobei 0≤x≤1,0≤y≤1,0≤z≤1 beträgt und
x + y + z = 1 beträgt; wobei das Wirtsmaterial wahlweise eine homogene Verteilung von Mg-Atomen umfasst.

6. Heterogenes, metalltragendes Material nach einem der Ansprüche 1 bis 5, wobei die sekundären Teilchen des heterogenen, metalltragenden Materials kugelförmig sind.

7. Heterogenes, metalltragendes Material nach einem der Ansprüche 1 bis 6, wobei das Dotiermaterial entweder eines von MgF₂ und CaF₂ oder ein anderes wasserunlösliches Metallhalogenid ist und in Form von Nanoteilchen vorliegt.

8. Heterogenes, metalltragendes Material nach einem der Ansprüche 1 bis 7, wobei das Dotiermaterial einen Größenbereich von ≥ 5 nm und ≤ 200 nm und bevorzugt zwischen 10 und 50 nm aufweist.

9. Verfahren zum homogenen Verteilen eines teilchenförmigen Dotiermaterials in einem Wirtsmaterial, das aus primären Teilchen besteht, die in sekundäre Teilchen agglomeriert sind, wodurch ein heterogenes metalltragendes Verbundmaterial erhalten wird, umfassend die Schritte des:
- Bereitstellens eines ersten Stroms umfassend eine Lösung eines Vorläufers des Wirtsmaterials,
- Bereitstellens eines zweiten Stroms umfassend ein Ausfällungsmittel,
- Bereitstellens eines dritten Stroms umfassend einen Komplexbildner,
- Bereitstellens einer Menge von unlöslichem teilchenförmigem Dotiermaterial entweder in einem oder mehreren der ersten, zweiten und dritten Ströme oder in einem vierten Strom bestehend aus einer Suspension des teilchenförmigen Dotiermaterials und
- Mischens des ersten, zweiten und dritten Stroms und, falls vorhanden, des vierten Stroms, wodurch das Wirtsmaterial und das Dotiermittel ausgefällt werden.

10. Verfahren nach Anspruch 9, wobei die Lösung des Vorläufers eine wässrige Metallsalzlösung ist und die Suspension des Dotiermaterials eine Suspension in Wasser und einem Suspensionsstabilisiermittel ist.

11. Verfahren nach den Ansprüchen 9 oder 10, wobei das teilchenförmige Dotiermaterial aus stabilisierten Nanoteilchen, bevorzugt aus Metallen oder Metalloxiden besteht und der Vorläufer entweder eines oder eine Mischung aus einem Metallnitrat-, -chlorid-, -halogenid- und -sulfatpulver ist.

12. Verfahren nach einem der Ansprüche 9 bis 11, wobei das Dotiermaterial entweder eines oder mehrere von MgO, Cr₂O₃, ZrO₂, Al₂O₃ und TiO₂ ist und einen Größenbereich von ≥ 5 nm und ≤ 200 nm aufweist.

13. Verwendung des Materials nach einem der Ansprüche 1 bis 8 zur Herstellung eines Kathodenmaterials für eine sekundäre Batterie durch Brennen des Materials mit einer Lithiumquelle.

14. Verwendung nach Anspruch 13, wobei das Dotiermaterial irgendeines von MgO, Cr₂O₃, ZrO₂, Al₂O₃ und TiO₂ ist und das Kathodenmaterial ein Lithiumübergangsmetalloxid ist.

15. Verwendung nach Anspruch 14, wobei das Dotiermaterial Al₂O₃ ist und das Kathodenmaterial LiNiO₂ ist.

## Revendications

1. Matériau métallifère hétérogène, comprenant un matériau hôte composé de particules primaires agglomérées en particules secondaires, et un matériau dopant particulaire, **caractérisé en ce que** le matériau dopant particulaire est distribué de façon homogène à l'intérieur des particules secondaires dudit matériau hôte.

2. Matériau métallifère hétérogène selon la revendication 1, dans lequel ledit matériau hôte est un hydroxyde, oxyhydroxyde, oxyde, oxycarbonate, carbonate ou oxalate métallique, ou bien un mélange de ceux-ci.

3. Matériau métallifère hétérogène selon la revendication 2, ledit matériau métallifère hétérogène répondant à la formule générale (matériau dopant)ₐ(matériau hôte)_{b}, où a et b sont des fractions pondérales, avec 0 < a < 0,4, de préférence 0,001 < a < 0,4, et mieux encore 0,001 < a < 0,02, et où b = 1 - a.

4. Matériau métallifère hétérogène selon l'une quelconque des revendications 1 à 3, dans lequel ledit matériau dopant est MgO, Cr₂O₃, ZrO₂, Al₂O₃ ou TiO₂, ou bien plusieurs d'entre eux, et se trouve sous la forme de nanoparticules.

5. Matériau métallifère hétérogène selon la revendication 3, dans lequel le matériau dopant est TiO₂ et le matériau hôte est un hydroxyde, oxyhydroxyde ou oxyde de NiₓMn_{y}Co_{z}, ou bien un mélange de ceux-ci, où x, y, z sont des fractions atomiques, avec 0 ≤ x ≤1, 0≤y≤1, 0≤z≤1, et x + y + z = 1, ledit matériau hôte comprenant éventuellement une distribution homogène d'atomes de Mg.

6. Matériau métallifère hétérogène selon l'une quelconque des revendications 1 à 5, lesdites particules secondaires du matériau métallifère hétérogène étant sphériques.

7. Matériau métallifère hétérogène selon l'une quelconque des revendications 1 à 6, dans lequel ledit matériau dopant est MgF₂ ou CaF₂, ou bien un autre halogénure métallique insoluble dans l'eau, et se trouve sous la forme de nanoparticules.

8. Matériau métallifère hétérogène selon l'une quelconque des revendications 1 à 7, dans lequel ledit matériau dopant présente une gamme de tailles de ≥ 5 nm et ≤ 200 nm, et de préférence entre 10 et 50 nm.

9. Procédé pour distribuer de façon homogène un matériau dopant particulaire dans un matériau hôte composé de particules primaires agglomérées en particules secondaires, pour obtenir ainsi un matériau composite métallifère hétérogène, comprenant les étapes consistant à :
- obtenir un premier courant comprenant une solution d'un précurseur du matériau hôte,
- obtenir un deuxième courant comprenant un agent de précipitation,
- obtenir un troisième courant comprenant un agent complexant,
- se procurer une quantité de matériau dopant particulaire insoluble, dans l'un ou plusieurs desdits premier, deuxième et troisième courants, ou bien dans un quatrième courant consistant en une suspension dudit matériau dopant particulaire, et
- mélanger lesdits premier, deuxième et troisième courants, et s'il est présent, ledit quatrième courant, pour précipiter ainsi ledit matériau hôte et ledit dopant.

10. Procédé selon la revendication 9, dans lequel ladite solution du précurseur est une solution aqueuse de sel métallique, et ladite suspension du matériau dopant est une suspension dans de l'eau et un agent de stabilisation de suspension.

11. Procédé selon la revendication 9 ou 10, dans lequel le matériau dopant particulaire se compose de nanoparticules stabilisées, de préférence de métaux ou d'oxydes métalliques, et le précurseur est une poudre de nitrate, chlorure, halogénure ou sulfate métallique, ou bien un mélange de celles-ci.

12. Procédé selon l'une quelconque des revendications 9 à 11, dans lequel ledit matériau dopant est MgO, Cr₂O₃, ZrO₂, Al₂O₃ ou TiO₂, ou bien plusieurs d'entre eux, et présente une gamme de tailles de ≥5 nm et ≤ 200 nm.

13. Utilisation du matériau selon l'une quelconque des revendications 1 à 8 pour fabriquer un matériau de cathode pour une batterie rechargeable, en cuisant ledit matériau avec une source de lithium.

14. Utilisation selon la revendication 13, dans laquelle le matériau dopant est MgO, Cr₂O₃, ZrO₂, Al₂O₃ ou TiO₂, et le matériau de cathode est un oxyde de lithium et de métal de transition.

15. Utilisation selon la revendication 14, dans laquelle le matériau dopant est Al₂O₃, et le matériau de cathode est LiNiO₂.
